# EUROPEAN PATENT SPECIFICATION

(11) **EP 3 066 552 B1**
(45) Date of publication and mention of the grant of the patent: **06.03.2019**
(21) Application number: 13795312.1
(22) Date of filing: 05.11.2013
(51) Int. Cl.: G06F 3/0489

(54) **METHODS OF PROCESSING ELECTRONIC FILES INCLUDING COMBINED CLOSE AND DELETE, AND RELATED SYSTEMS AND COMPUTER PROGRAM PRODUCTS**
VERFAHREN ZUR VERARBEITUNG ELEKTRONISCHER DATEIEN MIT KOMBINIERTEM ÖFFNEN UND LÖSCHEN SOWIE ENTSPRECHENDE SYSTEME UND COMPUTERPROGRAMMPRODUKTE
PROCÉDÉS DE TRAITEMENT DE FICHIERS ÉLECTRONIQUES COMPRENANT UNE FERMETURE ET UNE SUPPRESSION COMBINÉES, ET SYSTÈMES ET PRODUITS PROGRAMME D'ORDINATEUR ASSOCIÉS

(43) Date of publication of application: 14.09.2016
(73) Proprietor: Telefonaktiebolaget LM Ericsson (publ), 164 83 Stockholm (SE)
(72) Inventor: LIANG, Hongxin, S-19479 Upplands Väsby (SE); MAZMANOV, Dimitri, 169 72 Solna (SE)
(74) Representative: Zacco Sweden AB
(86) International application number: PCT/SE2013/051292
(87) International publication number: WO 2015/069153

(56) References cited:
- US-B1- 6 460 103

## Description

### TECHNICAL FIELD

Embodiments of present inventive concepts relate to electronic systems, and more particularly, to methods of processing electronic files in electronic memory and related systems and computer program products.

### BACKGROUND

When an electronic file is downloaded to an electronic system over the Internet, from another peer device, etc., the electronic file may be automatically saved in a download directory in electronic memory of the system. Often, such electronic files are viewed/used only once, but additional steps are required to actually delete the electronic file from memory.

With a PDF file that is downloaded from the Internet, for example, a user may view the PDF file using a PDF reader and then close the PDF reader. Closing the PDF reader, however, will not delete the PDF file from the system if the PDF file is stored in a download directory of system memory (as is typically the case with any file that has been downloaded).

To actually delete the file from memory, the user must identify/locate the file in the download directory, and then either delete the file or move it to the trash bin. Identifying/locating the file in the download directory, however, may be a non-trivial task, particularly if many files have been saved in the download directory. For example, the user may need to actually open and view the file using the PDF reader to confirm that the correct file is being deleted, and then close PDF reader, before deleting the file.

Deleting a file after viewing may thus require three or more steps and/or more than a trivial amount of time. Accordingly, there continues to exist a need for improved methods to delete files from memory.

From US-B-6 460 103 it is known to process an electronic file in a location in memory of an electronic system, wherein a visual representation of the electronic file is rendered in a window on a display, and responsive to user input selecting a combined close and save function on a keyboard, the window is closed and the electronic file is saved in the location in the memory.

### SUMMARY

According to first embodiments of inventive concepts disclosed herein, a method is provided to process an electronic file in a location in memory of an electronic system. The method includes rendering a visual representation of the electronic file and a close symbol in a window on a display.

Responsive to user input selecting an alternate function on a keyboard, a delete symbol is substituted for the close symbol in the window. Responsive to user input selecting the delete symbol while continuing to provide the user input selecting the alternate function and while the window including the visual representation of the electronic file is open on the display, the window including the visual representation of the electronic file on the display is closed, and the electronic file from the location in the memory is deleted.

By both closing and deleting a file responsive to a same user input designating deletion, user time and effort may be reduced thereby improving a user experience. Otherwise, the user may be required to close the file, and then find the file in a directory system of the memory and delete it, requiring more user time and effort. In addition, the file may not be easy to locate if the user does not know/remember the name and/or location of the file in the directory system of the memory. Downloaded files, for example, may be saved in a download directory using names defined by the system so that the user may not be able to easily identify a particular downloaded file for deletion based on its name. Moreover, downloaded files may only be used/viewed once so that easy/efficient deletion is particularly useful. Combined close/delete operations according to the first embodiments may also be useful for application installers which are typically used only once. Combined close/delete operations may also be useful when reviewing/deleting different versions of a same file (e.g., document), allowing the user to open/view the file and then close and delete the file using the same user input designating deletion.

For example, the user input selecting the alternate function may include user input holding one or a combination of keys on the keyboard, and the user input selecting the delete symbol may include user input selecting the delete symbol while holding the one or the combination of keys on the keyboard.

The user input selecting the alternate function may, for example, include holding one key (e.g., the "Alt" key, the "Ctrl" key, the "Function" key, etc.) to select deleting the file from its initial location and saving it to another location (e.g., a memory trash bin), also referred to as moving the file from the initial location to the other location. The user input selecting the alternate function may, for example, include holding a combination of keys (e.g., the "Shift" and "Alt" keys, the "Shift" and "Ctrl" keys, the "Shift" and "Function" keys, etc.) to select permanently deleting the file from its initial location (without saving to another location). Different keys and/or key combinations may thus be used to select different file delete options. Moreover, use of a combination of keys to select permanent deletion reduces the likelihood that a permanent deletion may be performed by accident.

According to some aspects of the first embodiments, the electronic file is a first electronic file, the location is a first location in memory, the window is a first window, the user input selecting the delete symbol is a first user input designating deletion, and deleting the first electronic file includes deleting the first electronic file from the first location in the memory and saving the first electronic file in a second location in memory. In addition, a visual representation of a second electronic file is rendered in a second window on the display. Responsive to second user input designating permanent deletion while the second window is open on the display wherein the second user input is different than the first user input, the second window presenting the second electronic file is closed, and the second electronic file is permanently deleted from the memory. Different user inputs may thus be used to select different file delete options. Moreover, use of a combination of keys to select permanent deletion reduces the likelihood that a permanent deletion may be performed by accident.

According to some aspects of the first embodiments, rendering the visual representation of the electronic file includes rendering the visual representation of the electronic file in the window on the display using a software application and providing a path of the electronic file defining the location of the electronic file in a file directory system of the memory. Deleting the electronic file includes deleting the electronic file from the location in the memory using the path of the electronic file.

According to some aspects of the first embodiments, deleting the electronic file includes deleting the electronic file from memory responsive to the user input selecting the delete symbol while the window is open on the display and responsive to determining that the user is authorized to delete the file. By requiring user authorization, a likelihood that a file is improperly deleted may be reduced.

According to some aspects of the first embodiments, the location is a first location in the memory, and deleting the electronic file includes deleting the electronic file from the first location in the memory and saving the electronic file in a second location in the memory (such as a memory trash bin).

According to some aspects of the first embodiments, deleting the electronic file includes permanently deleting the electronic file from the memory (without saving the file in another location such as a memory trash bin).

According to second embodiments of inventive concepts disclosed herein, an electronic system includes an electronic memory including an electronic file in a location in the electronic memory and a processor coupled to the memory. More particularly, the processor is configured to render a visual representation of the electronic file and a close symbol in a window on a display, to substitute a delete symbol for the close symbol in the window responsive to user input selecting an alternate function on a keyboard, to close the window including the visual representation of the electronic file on the display responsive to user input selecting the delete symbol while continuing to provide the user input selecting the alternate function and while the window including the visual representation of the electronic file is open on the display, and to delete the electronic file from the location in the memory.

The user input selecting the alternate function may include user input holding one or a combination of keys on the keyboard, and the user input selecting the delete symbol may include user input selecting the delete symbol (e.g., using a pointing device) while holding the one or the combination of keys on the keyboard.

According to some aspects of the second embodiments, the electronic file is a first electronic file, the location is a first location in memory, the window is a first window, the user input selecting the delete symbol is a first user input designating deletion, and the processor is configured to delete the first electronic file by deleting the first electronic file from the first location in the memory and saving the first electronic file in a second location in memory (e.g., a trash bin). In addition, the processor is configured to render a visual representation of a second electronic file in a second window on the display, to close the second window presenting the second electronic file responsive to second user input designating permanent deletion while the second window is open on the display wherein the second user input is different than the first user input, and to permanently delete the second electronic file from the memory responsive to the second user input designating permanent deletion while the second window is open on the display.

According to some aspects of the second embodiments, the processor is configured to render the visual representation of the electronic file in the window on the display using a software application, to provide a path of the electronic file defining the location of the electronic file in a file directory system of the memory, and to delete the electronic file from the location in the memory using the path of the electronic file.

According to some aspects of the second embodiments, the processor is configured to delete the electronic file from memory responsive to user input selecting the delete symbol while the window is open on the display and responsive to determining that the user is authorized to delete the file.

According to some aspects of the second embodiments, the location is a first location in the memory, and the processor is configured to delete the electronic file by deleting the electronic file from the first location in the memory and saving the electronic file in a second location in the memory.

According to some aspects of the second embodiments, the processor is configured to delete the electronic file by permanently deleting the electronic file from the memory.

According to third embodiments of inventive concepts disclosed herein, a computer program product includes a computer readable storage medium having computer readable program coded embodied therein. The computer readable program code includes computer readable program code configured to render a visual representation of an electronic file and a close symbol in a window on a display wherein the electronic file is in a location in memory of an electronic system. The computer readable program code further includes computer readable program code configured to substitute a delete symbol for the close symbol in the window responsive to user input selecting an alternate function on a keyboard. The computer readable program code also includes computer readable program code configured to close the window including the visual representation of the electronic file on the display responsive to user input selecting the delete symbol while continuing to provide the user input selecting the alternate function and while the window including the visual representation of the electronic file is open on the display, and to delete the electronic file from the location in the memory.

For example, the user input selecting the alternate function may include user input holding one or a combination of keys on the keyboard, and the user input selecting the delete symbol may include user input selecting the delete symbol while holding the one or the combination of keys on the keyboard.

According to some aspects of the third embodiments, the electronic file is a first electronic file, the location is a first location in memory, the window is a first window, the user input selecting the delete symbol is a first user input designating deletion, and deleting the first electronic file includes deleting the first electronic file from the first location in the memory and saving the first electronic file in a second location in memory. In addition, the computer readable program code includes computer readable program code configured to render a visual representation of a second electronic file in a second window on the display. The computer readable program code also includes computer readable program code configured to close the second window presenting the second electronic file and permanently delete the second electronic file from the memory responsive to second user input designating permanent deletion while the second window is open on the display, wherein the second user input is different than the first user input.

According to some aspects of the third embodiments, the computer readable program code includes computer readable program code configured to render the visual representation of the electronic file by rendering the visual representation of the electronic file in the window on the display using a software application and providing a path of the electronic file defining the location of the electronic file in a file directory system of the memory, and to delete the electronic file by deleting the electronic file from the location in the memory using the path of the electronic file.

According to some aspects of the third embodiments, the computer readable program code includes computer readable program code configured to delete the electronic file by deleting the electronic file from memory responsive to the user input selecting the delete symbol while the window is open on the display and responsive to determining that the user is authorized to delete the file.

According to some aspects of the third embodiments, the location is a first location in the memory, and the computer readable program code includes computer readable program code configured to delete the electronic file by deleting the electronic file from the first location in the memory and saving the electronic file in a second location in the memory.

According to some aspects of the third embodiments, the computer readable program code includes computer readable program code configured to delete the electronic file by permanently deleting the electronic file from the memory.

### BRIEF DESCRIPTION OF THE DRAWINGS

The accompanying drawings, which are included to provide a further understanding of the disclosure and are incorporated herein and constitute a part of this application, illustrate certain non-limiting embodiments of inventive concepts. In the drawings:
Figure 1 illustrates a block diagram of an electronic system according to some embodiments of inventive concepts;
Figures 2, 3, and 4 are flow charts illustrating operations and methods of electronic systems according to some embodiments of inventive concepts;
Figures 5A, 5B, 5C, and 5D illustrate windows including close and/or delete symbols and/or error messages according to some embodiments of inventive concepts;
Figure 6 is a flow chart illustrating operations and methods of electronic systems according to some examples not covered by the claims; and
Figures 7A and 7B illustrate windows and delete symbols according to some examples not covered by the claims.

### DETAILED DESCRIPTION

Embodiments of the present disclosure will be described more fully hereinafter with reference to the accompanying drawings. Other embodiments may take many different forms and should not be construed as limited to the embodiments set forth herein. Like numbers refer to like elements throughout.

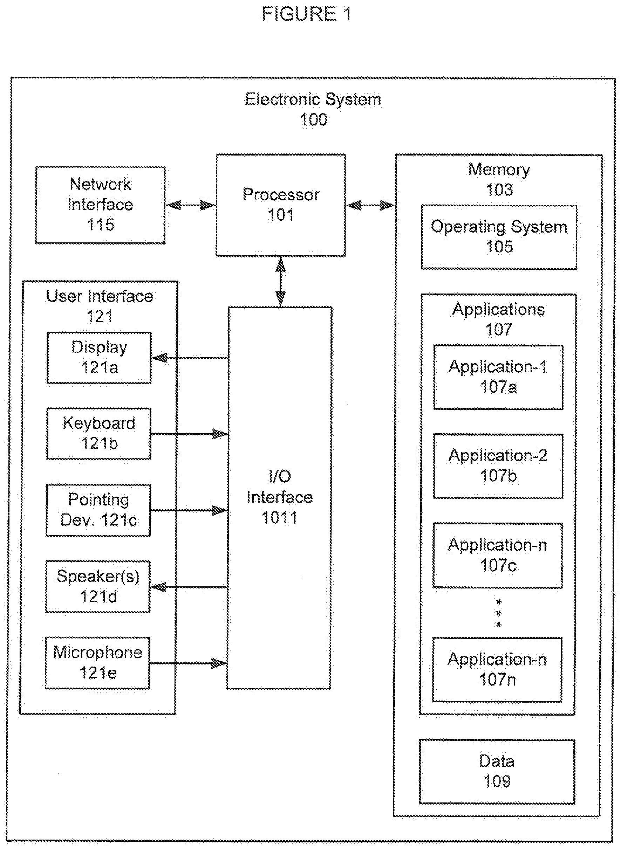

Figure 1 is a block diagram illustrating an electronic system 100 according to some embodiments of present inventive concepts. As shown in Figure 1, electronic system 100 may include processor 101 coupled to input/output (I/O) interface, network interface 115, and electronic memory 103. Network interface 115 may provide a wired/wireless communication interface with one or more remote devices through a network such as a local area network, a wide area network (e.g., the Internet), a wireless network (e.g., a WiFi network, a cellular network, etc.), etc. The I/O interface may provide an interface between processor 101 and one or more elements of a user interface 121, such as display 121a, keyboard 121b, pointing device (e.g., mouse, touch pad, etc.) 121c, speaker(s) 121d, microphone 121e, etc.

Electronic system 100 may be any electronic device, such as a desktop computer, a laptop computer, a handheld computer, a tablet computer, a smartphone, a personal digital assistant, etc. Accordingly, elements of the user interface 121 may vary depending on the type of device. In some embodiments (e.g., smaller devices such as smartphones), display 121a may be a touch sensitive display, and a separate keyboard 121b and/or pointing device 121c may be omitted. In other embodiments (e.g., a laptop computer), display 121a, keyboard 121b, pointing device 121c, speaker 121d, and microphone 121e may be integrated in the device. In still other embodiments (e.g., a desktop computer), elements of user interface 121 (e.g., display 121a, keyboard 121b, pointing device 121c (e.g., a mouse) may be provided outside electronic system with wired/wireless couplings through I/O interface 1011 to processor 101. Accordingly, all elements of user interface 121 may be integrated within electronic system 100; some elements of user interface 121 may be integrated within electronic system 100 with other elements being provided external to electronic system 100; or all elements of user interface 121 may be provided external to electronic system 100.

Memory 103 may include an operating system 105, applications 107 (including a plurality of applications 107a to 107n, also referred to as application programs), and data 109. Operating system 105 includes software executed by processor 101 to manage resources for the electronic system 100 and to provide common services for the different applications. Each application (e.g., 107a to 107n) includes software that may be executed by processor 101 to provide a particular user function/service (e.g., word processing, spread sheet, e-mail, etc.). Data 109 portions of memory 103 may be used to store information as files that may be organized by directories (also referred to as folders). Moreover, a location of each file in memory 103 may be defined by a path (also referred to as a map). While not shown separately, a memory trash bin (also referred to as a trash bin) may be used to store files deleted from other portions of memory 103, and the memory trash bin may be included as a director/folder in data 109 portion of memory 103.

Whenever an electronic file (also referred to as a file) is opened in a window by processor 101 running an application 107 (so that a visual representation of the file is rendered in the window on display 121a), operating system 105 (running on processor 101) may collect information about the file including a path of the file in a file system defining a location of the file in a data 109 portion of memory 103. The path may be obtained by maintaining a map from the window to the opened file.

The operating system 105 (running on processor 101) may thus associate the file with the window (also referred to as a dialog) used to open/render the visual representation of the file on display 121a.

With the file opened/rendered in the window on display 121a, the file and/or application 107 may be used as normal.

Once the user is done using the file/window, the user may click a special symbol (also referred to as a button) or a menu item which states "quit and move current file to trash bin", or the user may hold the "Alt" key and click the close symbol/button of the window (dialog). Another menu option may state "quit and permanently delete current file without throwing it to trash bin," or a different combination of keys (e.g., "Shift" and "Alt") may be held while clicking the close symbol/button of the window. Accordingly, the window/file may be closed and the file may be deleted in a single operation. By requiring a combination of keys for permanent deletion, a likelihood of accidental permanent deletion may be reduced.

The window (dialog) will be closed and the file will be permanently deleted from data 109 memory 103 (also referred to as the file system), or the window will be closed and the file will be moved from its initial location in data 109 memory 103 to a trash bin if permission allows. If a current user closing the window has no permission to delete the file, an error window may be provided notifying the user that it is not possible to delete the file, and the file will be maintained in its initial location in data 109 memory 103. By requiring appropriate authorization before allowing deletion, a likelihood of undesired/inappropriate file deletion may be reduced.

Instead of clicking the close symbol/button with a key combination, the user can close the window/file and move the file to the trash bin by instead pressing and holding a key combination (e.g., "Ctrl" and "Shift"), dragging the top panel of the opened window (while holding the key combination), and dropping the window to a visual representation of a trash bin that has appeared the moment drag motion was initiated (while continuing holding the key combination). Since this close/delete service may be provided system-wide as a feature of operating system 105, the application(s) 107 may not have to implement additional functionality.

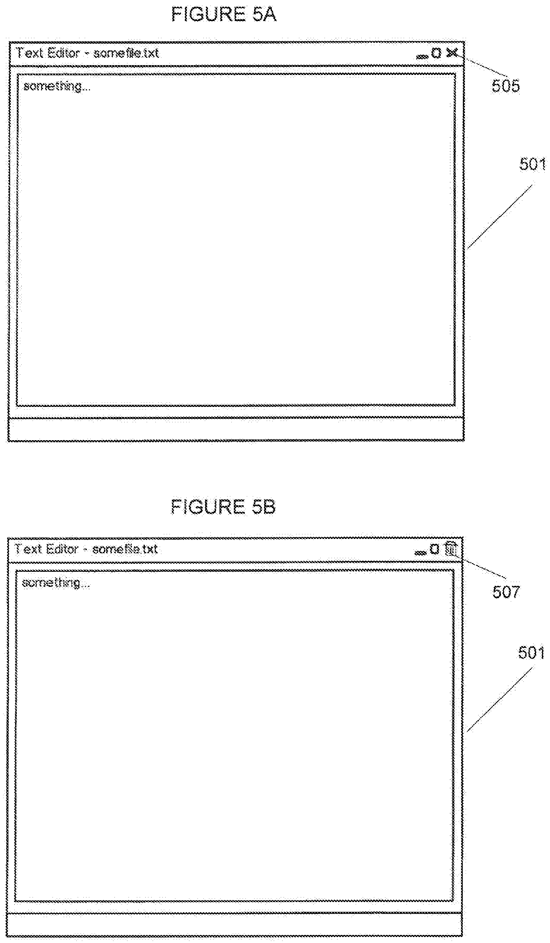

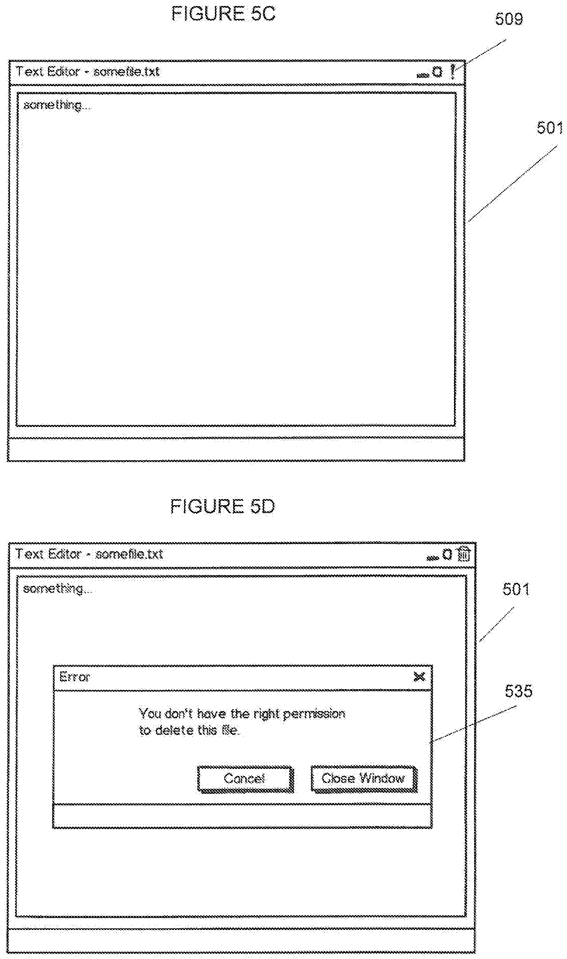

According to some embodiments shown in Figure 5A, a visual representation of the file may be rendered in window 501, and the window 501 may normally include a "close" symbol/button 505. When a first special key or key combination is held (e.g., the "Alt" key) with the pointer device pointing on the window 501, the "close" symbol/button 505 of Figure 5A may be replaced with a first delete symbol 507 as shown in Figure 5B. By clicking the delete symbol 507 while holding the special key or key combination (e.g., the "Alt" key), the window 501 may be closed, the file may be deleted from its initial location in data 109 memory 103, and the file may be saved in a second location of memory different than the initial location (e.g., saved in a memory trash bin). When a second special key or key combination (different than the first special key/combination) is held (e.g., a combination of "Shift" and "Alt" keys held together) with the pointer device pointing on the window 501, the "close" symbol/button 505 of Figure 5A may be replaced with a second delete symbol 509 as shown in Figure 5C. By clicking the second delete symbol 509 while holding the special key or key combination (e.g., the "Shift" and "Alt" keys), the window 501 may be closed, and the file may be permanently deleted from memory 103 (i.e., deleted from its initial location in memory without saving to another location, such as the trash bin). By requiring a key combination for permanent deletion, a likelihood of accidental permanent deletion may be reduced.

If the user does not have permission to delete the file, an error message 535 may be generated if a file delete is attempted, as shown in Figure 5D. Stated in other words, the error message 535 of Figure 5D may be generated and file modification/deletion may be blocked if either of the delete symbols 507 or 509 is selected by a user with insufficient permission. As further shown in Figure 5D, the error message 535 may provide options to cancel the close/delete command or to close the window/file without modifying/deleting the file.

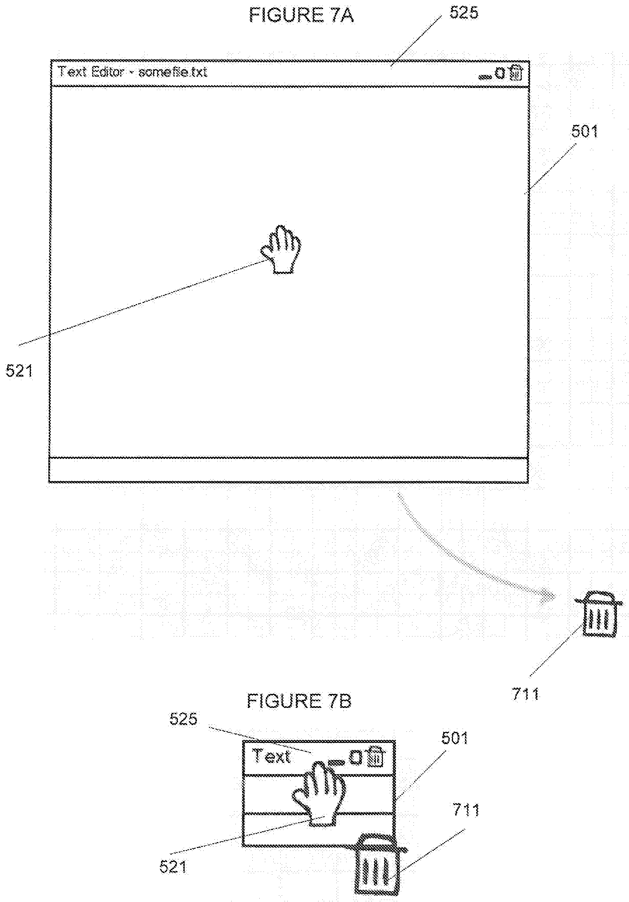

According to still other examples illustrated in Figures 7A and 7B, a special key or key combination (e.g., "Ctrl" and "Shift") may be held to modify a drag and drop operation for the window 501. When the special key/combination (e.g., "Ctrl" and "Shift") is held while dragging the window (e.g., using the pointer/mouse and left click), a visual representation of a trash bin 711 may be rendered on display 121a outside of window 501 as shown in Figure 7A. For example, a drag operation may be performed by "left clicking" while the pointer 521 is on a margin 525 of window 501 (while the special key/combination is held) to "grab" the window 501 and moving/dragging the window by moving the pointer 525 while continuing to hold the "left click" and the special key/combination. Once the window has been dragged to the visual representation of the trash bin 711, as shown in Figure 7B, the "left click" may be released to "drop" the window into the visual representation of the trash bin 711, to thereby close the window, delete the file from its initial location in data 109 memory 103, and save the file in the trash bin.

Close/delete operations according to embodiments disclosed herein may be used for any type of file that is delete-able after use, such as normal documents (e.g., word processor documents, spreadsheet documents, etc.), application installers, downloaded files, etc. Close/delete operations according to some embodiments may be particularly useful, for example, when used with application installers because there is normally no point to keeping an application installer after the related application program has been installed. Stated in other words, once an application installer file has been opened and used, there is generally no further use for the application installer file, and by closing and deleting the application installer file using a same operation, memory space and/or time may be saved. Combined close/delete operations may also be useful for downloaded files that are viewed only once.

While application installer files and downloaded files are discussed by way of example, combined close/delete operations may be useful for any type of file. For example, there may be several versions of a document file in a folder, but a user may only want to save one of the files without remembering a name of the particular file to be saved. Accordingly, the user may need to open each of the files to identify the file to be saved/maintained and the files to be deleted. With combined close/delete operations, each undesired file may be closed and deleted using combined close/delete operation so that a separate delete operation is not required after closing the file, thereby saving time.

Moreover, use of a key combination for permanent deletion may be relatively easy for a user to perform, but relatively difficult to execute by accident.

An advantage of combined close/delete operations according to some embodiments of inventive concepts is to reduce a number of operations needed to delete a file and thereby improve a user experience. Files downloaded from the Internet or other peer devices are usually by default stored in a Download directory/folder in data 109 memory 103, and many of these downloaded files may be viewed or used only once. Because it is not currently convenient to delete downloaded files (e.g., because the file names are automatically assigned and thus not easily identified), a relatively large number of downloaded files may pile up in the Download directory making it difficult to find the right downloaded file(s) to delete. Accordingly, the Download directory may be in such a mess after a relatively short period of use that the user may have to spend a significant amount of time to clean/organize the Download directory because the user is not sure which of the downloaded files should be kept and which should be deleted.

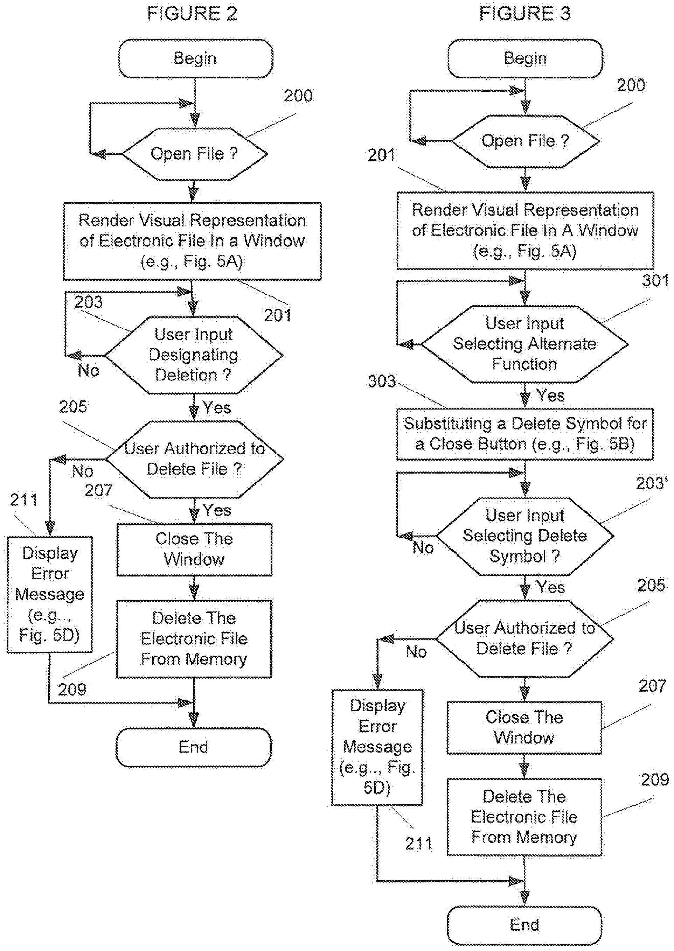

Combined close/delete operations of processor 101 using operating system 105 according to some embodiments of inventive concepts will be discussed in greater detail below with respect to the flow charts of Figures 2, 3, 4, and 6. By using operating system 105 to implement combined close/delete operations, the combined close/delete operations may be implemented system wide so that separate modifications of multiple application programs 107a to 107n is not required.

According to some embodiments illustrated in Figure 2, processor 101 may be configured to open an electronic file (also referred to as a file) responsive to user input at block 200. Processor 101, for example, may be configured to open the electronic file responsive to user input "double clicking" (using pointing device 121c) on an icon/symbol representing the file on a graphical user interface (GUI), responsive to user input "double clicking" (using pointing device 121c) on a file name in a directory listing, etc. Responsive to opening the file at block 200, processor 101 may render a visual representation of the electronic file in a window 501 on display 121a at block 201. More particularly, rendering the visual representation of the electronic file may include rendering the visual representation of the electronic file in the window 501 on display 121a using a software application (e.g., one of software applications 107a to 107n in memory 103) and providing a path of the electronic file defining the location of the electronic file in a file directory system of memory 103.

As shown in Figure 5A, the window 501 may include a close symbol 505 (also referred to as a close button), and by clicking on the close symbol/button (using pointing device 121c), the window and file may be closed without changing a status of the file in memory 103. User input designating the close symbol/button (e.g., clicking on the close symbol/button 505 using pointing device 121c) may thus close the window and file without deleting/moving/altering the file in memory 103.

While the file is open (i.e., while the visual representation of the file is rendered in window 501 on display 121a), the user may provide input designating deletion of the file at block 203. As discussed in greater detail below, the user input designating file deletion may include: user input selecting an alternate function (holding a key or key combination) to substitute a delete symbol 507/509 for the close symbol/button 505 as shown in Figures 5B and 5C and user input selecting (e.g., using pointer device 121c to click on) the delete symbol 507/509; user input selecting (e.g., clicking on) a menu item from a menu bar on display 121b; and/or user input selecting (e.g., clicking on) a button from a tool bar on display 121b.

Responsive to user input designating deletion at block 203, processor 101 may determine if the user is authorized to delete the file at block 205. Responsive to the user not having authorization to delete the file at block 205, processor 101 may render an error message 535 in the window 501 as shown in Figure 5D and block deletion of the file at block 211. The error message 535 may inform the user that the user is not authorized to delete the file, and the error message 535 may provide options to cancel the delete operation (and resume rendering the visual representation of the file in the window 501) by clicking on the "Cancel" option using pointer device 121c, or to close the file and window (without deleting/modifying/moving the file) by clicking on the "Close Window" option using pointer device 121c.

Responsive to user input designating deletion at block 203 and responsive to the user having authorization to delete the file at block 205, processor 101 may close the window including the visual representation of the electronic file on the display 121a at block 207, and delete the electronic file from the location in the memory 103 at block 209. More particularly, processor 101 may delete the electronic file from the location in memory 103 using the path of the electronic file (defining the location of the electronic file in a file directory system of memory 103) that was provided when the file was opened.

According to some embodiments, when the visual representation of the file is initially rendered at block 201, the electronic file may be saved in a first location in memory 103 (e.g., in data 109 memory 103) defined by the path, and deleting the electronic file at block 209 may include deleting the electronic file from the first location in memory 103 and saving the electronic file in a second location in the memory 103 (e.g., in a trash bin in memory 103). According to some other embodiments, deleting the electronic file at block 209 may include permanently deleting the electronic file from memory 103 (e.g., deleting the file from memory without saving the file in another location such as a trash bin).

According to some other embodiments illustrated in Figure 3, processor 101 may be configured to open an electronic file (also referred to as a file) responsive to user input at block 200. Processor 101, for example, may be configured to open the electronic file responsive to user input "double clicking" (using pointing device 121c) on an icon representing the file on a graphical user interface (GUI), responsive to user input "double clicking" (using pointing device 121c) on a file name in a directory listing, etc. Responsive to opening the file at block 200, processor 101 may render a visual representation of the electronic file in a window 501 on display 121a at block 201. More particularly, rendering the visual representation of the electronic file may include rendering the visual representation of the electronic file in the window 501 on display 121a using a software application (e.g., one of software applications 107a to 107n in memory 103) and providing a path of the electronic file defining the location of the electronic file in a file directory system of memory 103.

As shown in Figure 5A, the window 501 may include a close symbol/button 505, and by clicking on the close symbol/button (using pointing device 121c), the window and file may be closed without changing a status of the file in memory 103. User input designating the close symbol/button (e.g., clicking on the close symbol/button 505 using pointing device 121c) may thus close the window and file without deleting/moving/altering the file in memory 103.

While the file is open (i.e., while the visual representation of the file is rendered in window 501 on display 121a), the user may provide input (e.g., by holding a key or a combination of keys on keyboard 121b) to select an alternate function at block 301. Responsive to such user input selecting an alternate function at block 301, processor 101 may substitute a delete symbol 507/509 (also referred to as a delete button) for the close symbol/button 505 in window 501 at block 303 as shown in Figure 5B and/or in Figure 5C. For example, the user input selecting the alternate function at block 301 may include holding an "Alt" key on keyboard 121b, holding a "Ctrl" key on keyboard 121b, holding a "Function" key on a keyboard, holding a "Shift" key and an "Alt" key on keyboard 121b, holding a "Shift" key and a "Ctrl" key on keyboard 121b, holding a "Shift" key and a "Function" key on keyboard 121b, etc. While continuing to provide the input to select the alternate function (e.g., by continuing to hold the key or combination of keys) so that the delete symbol 507/509 is presented, the user may provide input designating deletion by selecting the delete symbol 507/509 (e.g., by clicking on the delete symbol 507/509 using pointing device 121c) at block 203'.

Responsive to user input selecting the delete symbol at block 203', processor 101 may determine if the user is authorized to delete the file at block 205. Responsive to the user not having authorization to delete the file at block 205, processor 101 may render an error message 535 in the window 501 as shown in Figure 5D and block deletion of the file at block 211. The error message 535 may inform the user that the user is not authorized to delete the file, and the error message 535 may provide options to cancel the delete operation (and resume rendering the visual representation of the file in the window 501) by clicking on the "Cancel" option using pointer device 121c, or to close the file and window (without deleting/modifying/moving the file) by clicking on the "Close Window" option using pointer device 121c.

Responsive to user input selecting the delete symbol at block 203' and responsive to the user having authorization to delete the file at block 205, processor 101 may close the window including the visual representation of the electronic file on the display 121a at block 207, and delete the electronic file from the location in the memory 103 at block 209. More particularly, processor 101 may delete the electronic file from the location in memory 103 using the path of the electronic file (defining the location of the electronic file in a file directory system of memory 103) that was provided when the file was opened.

According to some embodiments, when the visual representation of the file is initially rendered at block 201, the electronic file may be saved in a first location in memory 103 (e.g., in data 109 memory 103) defined by the path, and deleting the electronic file at block 209 may include deleting the electronic file from the first location in memory 103 and saving the electronic file in a second location in the memory 103 (e.g., in a trash bin in memory 103). According to some other embodiments, deleting the electronic file at block 209 may include permanently deleting the electronic file from memory 103 (e.g., deleting the file from memory without saving the file in another location such as a trash bin).

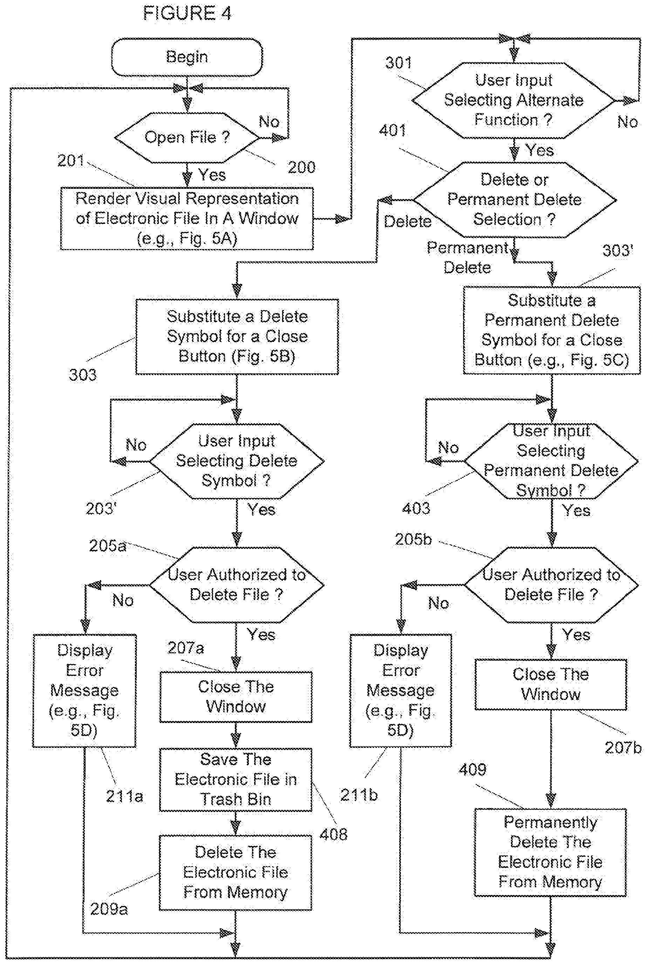

According to still other embodiments illustrated in Figure 4, processor 101 may be configured to open a first electronic file (also referred to as a first file) responsive to user input at block 200. Processor 101, for example, may be configured to open the first electronic file responsive to user input "double clicking" (using pointing device 121c) on an icon representing the first file on a graphical user interface (GUI), responsive to user input "double clicking" (using pointing device 121c) on a file name in a directory listing, etc. Responsive to opening the first file at block 200, processor 101 may render a visual representation of the first electronic file in a first window 501 on display 121a at block 201. More particularly, rendering the visual representation of the first electronic file may include rendering the visual representation of the first electronic file in the first window 501 on display 121a using a first software application (e.g., one of software applications 107a to 107n in memory 103) and providing a first path of the electronic file defining the location of the first electronic file in a file directory system of memory 103.

As shown in Figure 5A, the first window 501 may include a close symbol/button 505, and by clicking on the close symbol/button (using pointing device 121c), the first window and the first file may be closed without changing a status of the first file in memory 103. User input designating the close symbol/button (e.g., clicking on the close symbol/button 505 using pointing device 121c) may thus close the first window and the first file without deleting/moving/altering the first file in memory 103.

While the first file is open (i.e., while the visual representation of the first file is rendered in the first window 501 on display 121a), the user may provide first input (e.g., by holding a key or a combination of keys on keyboard 121b) to select a first alternate function at block 301. At block 401, processor 101 may determine whether the first alternate function designates deletion of the first file and saving the first file in a trash bin (i.e., moving the first file from a first location in memory defined by the path to the trash bin) or permanent deletion (without saving in a trash bin). By way of example, holding a single key (e.g., an "Alt" key, a "Ctrl" key, a "Function" key, etc.) may designate deletion of the file and moving the file to the trash bin, while holding a combination of keys (e.g., a "Shift" key and an "Alt" key, a "Shift" key and a "Ctrl" key, a "Shift" key and a "Function" key, an "Alt" and a "Ctrl" key, a "Shift" key and a "Ctrl" key, etc.) may designate permanent deletion of the file (without moving the file to the trash bin).

Responsive to such user input selecting the alternate function to delete and move to the trash bin at blocks 301 and 401 (e.g., responsive to the user using a single designated key), processor 101 may substitute delete symbol 507 (also referred to as a delete button) for the close symbol/button 505 in the first window 501 at block 303 as shown in Figure 5B. For example, the user input selecting the alternate function at block 301 may be defined as holding one of an "Alt" key on keyboard 121b, holding a "Ctrl" key on keyboard 121b, holding a "Function" key on a keyboard, etc. While continuing to provide the input to select the alternate function so that the delete symbol 507 is presented, the user may provide input designating deletion by selecting the delete symbol 507 (e.g., by clicking on the delete symbol 507 using pointing device 121c) at block 203'.

Responsive to user input selecting the delete symbol at block 203', processor 101 may determine if the user is authorized to delete the first file at block 205a. Responsive to the user not having authorization to delete the first file at block 205a, processor 101 may render an error message 535 in the first window 501 as shown in Figure 5D and block deletion of the first file at block 211a. The error message 535 may inform the user that the user is not authorized to delete the first file, and the error message 535 may provide options to cancel the delete operation (and resume rendering the visual representation of the first file in the window 501) by clicking on the "Cancel" option using pointer device 121c, or to close the first file and window (without deleting/modifying/moving the file) by clicking on the "Close Window" option using pointer device 121c.

Responsive to user input selecting the delete symbol at block 203' and responsive to the user having authorization to delete the first file at block 205a, processor 101 may close the first window including the visual representation of the first electronic file on the display 121a at block 207a, save the first electronic file in the trash bin at block 408, and delete the first electronic file from the first location in memory 103 at block 209a (defined by the first path). More particularly, processor 101 may delete the first electronic file from the first location in memory 103 using the first path (defining the location of the first electronic file in a file directory system of memory 103) that was provided when the first file was opened.

Still referring to Figure 4, processor 101 may be configured to open a second electronic file (also referred to as a second file) responsive to user input at block 200. Processor 101, for example, may be configured to open the second electronic file responsive to user input "double clicking" (using pointing device 121c) on an icon representing the second file on a graphical user interface (GUI), responsive to user input "double clicking" (using pointing device 121c) on a file name in a directory listing, etc. Responsive to opening the second file at block 200, processor 101 may render a visual representation of the second electronic file in a second window 501 on display 121a at block 201. More particularly, rendering the visual representation of the second electronic file may include rendering the visual representation of the second electronic file in the second window 501 on display 121a using the first software application or a second software application (different than the first software application) and providing a second path defining the location of the second electronic file in a file directory system of memory 103.

As shown in Figure 5A, the second window 501 may include a close symbol/button 505, and by clicking on the close symbol/button (using pointing device 121c), the second window and the second file may be closed without changing a status of the second file in memory 103. User input designating the close symbol/button (e.g., clicking on the close symbol/button 505 using pointing device 121c) may thus close the second window and the second file without deleting/moving/altering the second file in memory 103.

While the second file is open (i.e., while the visual representation of the second file is rendered in the second window 501 on display 121a), the user may provide second input (e.g., by holding a combination of keys on keyboard 121b) to select a second alternate function at block 301. At block 401, processor 101 may determine whether the second alternate function designates deletion of the second file and saving the second file in a trash bin (i.e., moving the second file from a second location in memory defined by the path to the trash bin) or permanent deletion (without saving in a trash bin). As discussed above, holding a combination of keys (e.g., a "Shift" key and an "Alt" key, a "Shift" key and a "Ctrl" key, a "Shift" key and a "Function" key, an "Alt" and a "Ctrl" key, a "Shift" key and a "Ctrl" key, etc.) may designate permanent deletion of the second file (without moving the file to the trash bin).

Responsive to such user input selecting the alternate function to permanently delete the second file at blocks 301 and 401 (e.g., responsive to the user pressing a designated combination of keys on keyboard 121b), processor 101 may substitute permanent delete symbol 509 (also referred to as a permanent delete button) for the close symbol/button 505 in the second window 501 at block 303' as shown in Figure 5C. While continuing to provide the input to select the alternate function so that the permanent delete symbol 509 is presented, the user may provide input designating permanent deletion by selecting the permanent delete symbol 509 (e.g., by clicking on the permanent delete symbol 509 using pointing device 121c) at block 403.

Responsive to user input selecting the permanent delete symbol 509 at block 403, processor 101 may determine if the user is authorized to delete the second file at block 205b. Responsive to the user not having authorization to delete the second file at block 205b, processor 101 may render an error message 535 in the second window 501 as shown in Figure 5D and block deletion of the second file at block 211b. The error message 535 may inform the user that the user is not authorized to delete the second file, and the error message 535 may provide options to cancel the delete operation (and resume rendering the visual representation of the first file in the window 501) by clicking on the "Cancel" option using pointer device 121c, or to close the second file and window (without deleting/modifying/moving the second file) by clicking on the "Close Window" option using pointer device 121c.

Responsive to user input selecting the permanent delete symbol 509 at block 403 and responsive to the user having authorization to delete the second file at block 205b, processor 101 may close the second window including the visual representation of the second electronic file on the display 121a at block 207b, and delete the second electronic file from the second location in memory 103 at block 209a (defined by the second path) without saving the second file to the trash bin. More particularly, processor 101 may delete the second electronic file from the second location in memory 103 using the second path (defining the location of the second electronic file in a file directory system of memory 103) that was provided when the second file was opened.

While first and second files are discussed by way of example with respect to Figure 4, operations of Figure 4 may be performed for any number of files, and operations discussed with respect to the second file may be performed before or after operations discussed with respect to the first file. Moreover, the first and second files may be of the same or different file types, and the first and second files may be opened using the same or different software application(s).

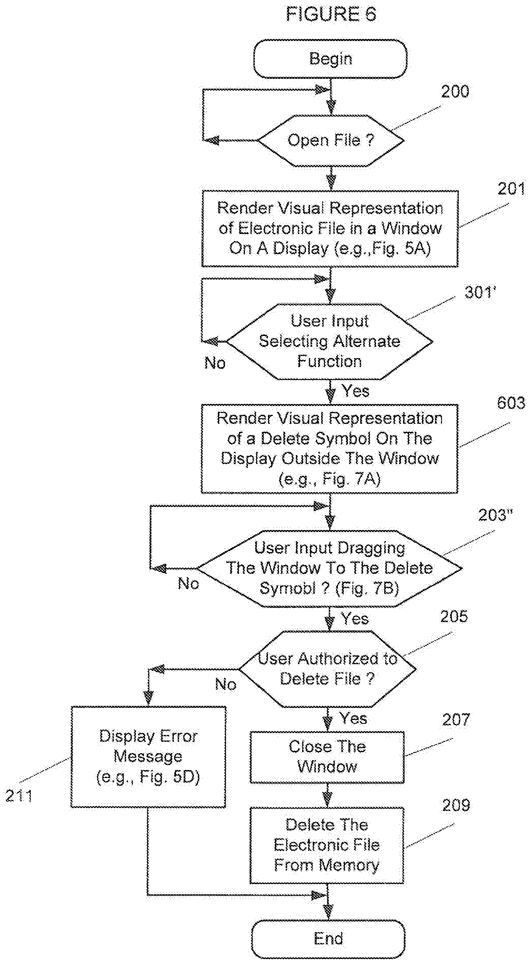

According to yet other examples illustrated in Figure 6, processor 101 may be configured to open an electronic file (also referred to as a file) responsive to user input at block 200. Processor 101, for example, may be configured to open the electronic file responsive to user input "double clicking" (using pointing device 121c) on an icon representing the file on a graphical user interface (GUI), responsive to user input "double clicking" (using pointing device 121c) on a file name in a directory listing, etc. Responsive to opening the file at block 200, processor 101 may render a visual representation of the electronic file in a window 501 on display 121a at block 201. More particularly, rendering the visual representation of the electronic file may include rendering the visual representation of the electronic file in the window 501 on display 121a using a software application (e.g., one of software applications 107a to 107n in memory 103) and providing a path of the electronic file defining the location of the electronic file in a file directory system of memory 103.

As shown in Figure 5A, the window 501 may include a close symbol/button 505, and by clicking on the close symbol/button (using pointing device 121c), the window and file may be closed without changing a status of the file in memory 103. User input designating the close symbol/button (e.g., clicking on the close symbol/button 505 using pointing device 121c) may thus close the window and file without deleting/moving/altering the file in memory 103.

While the file is open (i.e., while the visual representation of the file is rendered in window 501 on display 121a), the user may select an alternate function at block 301', for example, by holding one or a combination of keys on keyboard 121b (e.g., an "Alt" key, a "Ctrl" key, a "Function" key, a "Shift" key and an "Alt" key, a "Shift" key and a "Ctrl" key, a "Shift" key and a "Function" key, etc.). Responsive to the user input selecting an alternate function at block 301', processor 101 may render a visual representation of a delete symbol 711 on the display 121a outside the window 501 at block 603 as shown in Figure 7A.

At block 203", the user may designate deletion by dragging the window 501 including the visual representation of the electronic file to the visual representation of the delete symbol 711 at block 203". More particularly, the user may designate deletion by dragging the window 501 to the delete symbol 711 while holding the one key or the combination of keys on keyboard 121b as discussed above with respect to block 301'. The dragging operation may be performed as discussed above using pointing device 121c, using a "left click" to "grab" the window (e.g., in region 525) and moving the pointing device 121c to drag the window 501 to delete symbol 711. Once the window 501 has been dragged to delete symbol 711, the "left click" may be released to "drop" the window into the delete symbol 711 to complete the operation.

Responsive to user input dragging/dropping window 501 to/in delete symbol 711 at block 203", processor 101 may determine if the user is authorized to delete the file at block 205. Responsive to the user not having authorization to delete the file at block 205, processor 101 may render an error message 535 in the window 501 as shown in Figure 5D and block deletion of the file at block 211. The error message 535 may inform the user that the user is not authorized to delete the file, and the error message 535 may provide options to cancel the delete operation (and resume rendering the visual representation of the file in the window 501) by clicking on the "Cancel" option using pointer device 121c, or to close the file and window (without deleting/modifying/moving the file) by clicking on the "Close Window" option using pointer device 121c.

Responsive to user input dragging/dropping window 501 to/in delete symbol 711 at block 203" and responsive to the user having authorization to delete the file at block 205, processor 101 may close the window including the visual representation of the electronic file on the display 121a at block 207, and delete the electronic file from the location in the memory 103 at block 209. More particularly, processor 101 may delete the electronic file from the location in memory 103 using the path of the electronic file (defining the location of the electronic file in a file directory system of memory 103) that was provided when the file was opened.

According to some embodiments, when the visual representation of the file is initially rendered at block 201, the electronic file may be saved in a first location in memory 103 (e.g., in data 109 memory 103) defined by the path, and deleting the electronic file at block 209 may include deleting the electronic file from the first location in memory 103 and saving the electronic file in a second location in the memory 103 (e.g., in a trash bin in memory 103). According to some other embodiments, deleting the electronic file at block 209 may include permanently deleting the electronic file from memory 103 (e.g., deleting the file from memory without saving the file in another location such as a trash bin).

Operations/blocks of Figures 2, 3, 4, and 6 are provided by way of example to more clearly illustrate/describe embodiments of inventive concepts without requiring all such operations/blocks of a particular flow chart in a particular embodiment. By way of example, operations of blocks 200, 205, 205a, 205b 211, 211a, and/or 211b may be omitted from any of Figures 2, 3, 4, and/or according to according to some embodiments.

### Further Definitions and Embodiments

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When a node is referred to as being "connected", "coupled", "responsive", or variants thereof to another node, it can be directly connected, coupled, or responsive to the other node or intervening nodes may be present. In contrast, when an node is referred to as being "directly connected", "directly coupled", "directly responsive", or variants thereof to another node, there are no intervening nodes present. Like numbers refer to like nodes throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, nodes, steps, components or functions but does not preclude the presence or addition of one or more other features, integers, nodes, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without substantially departing from the principles of present inventive concepts. All such variations and modifications are intended to be included herein within the scope of present inventive concepts.

## Claims

1. A method of processing an electronic file in a location in memory (103) of an electronic system (100), the method comprising:
rendering (201) a visual representation of the electronic file and a close symbol (505) in a window (501) on a display (121a);
responsive to user input selecting (301) an alternate function on a keyboard (121b), substituting (303) a delete symbol (507) for the close symbol (505) in the window; and
responsive to user input selecting (203') the delete symbol (507) while continuing to provide the user input selecting the alternate function and while the window (501) including the visual representation of the electronic file is open on the display (121a), closing (207) the window including the visual representation of the electronic file on the display (121a) and deleting (209) the electronic file from the location in the memory (103).

2. The method of Claim 1 wherein the user input selecting the alternate function comprises user input holding one or a combination of keys on the keyboard (121b) and wherein the user input selecting the delete symbol comprises user input selecting the delete symbol while holding the one or the combination of keys on the keyboard (121b).

3. The method of Claim 1 wherein the electronic file is a first electronic file, wherein the location is a first location in memory (103), wherein the window (501) is a first window, wherein the user input selecting (203') the delete symbol is a first user input designating deletion, and wherein deleting the first electronic file comprises deleting (209a) the first electronic file from the first location in the memory (103) and saving (408) the first electronic file in a second location in memory (103), the method further comprising:
rendering (201) a visual representation of a second electronic file in a second window (501) on the display (121a);
responsive to second user input designating permanent deletion (403) while the second window (501) is open on the display (121a) wherein the second user input (509) is different than the first user input (507), closing (207b) the second window (501) presenting the second electronic file; and
responsive to the second user input designating permanent deletion (403) while the second window (501) is open on the display (121a), permanently deleting (409) the second electronic file from the memory (103).

4. The method of any one of Claims 1-3 wherein rendering the visual representation of the electronic file comprises rendering the visual representation of the electronic file in the window on the display (121a) using a software application (107) and providing a path of the electronic file defining the location of the electronic file in a file directory system of the memory (103), and wherein deleting the electronic file comprises deleting the electronic file from the location in the memory (103) using the path of the electronic file.

5. The method of any one of Claims 1-4 wherein deleting the electronic file comprises deleting (209) the electronic file from memory (103) responsive to the user input selecting (203') the delete symbol while the window is open on the display and responsive to determining (205) that the user is authorized to delete the file.

6. The method of any one of Claims 1, 2, 4, or 5 wherein the location is a first location in the memory (103), and wherein deleting the electronic file comprises deleting (209a) the electronic file from the first location in the memory (103) and saving (408) the electronic file in a second location in the memory (103).

7. The method of any one of Claims 1, 2, 4, or 5 wherein deleting the electronic file comprises permanently deleting (409) the electronic file from the memory (103).

8. An electronic system (100) comprising:
an electronic memory (103) including an electronic file in a location in the electronic memory (103); and
a processor (101) coupled to the memory, wherein the processor (101) is configured to render a visual representation of the electronic file and a close symbol (505) in a window (501) on a display (121a), substitute a delete symbol (507) for the close symbol (505) in the window responsive to user input selecting an alternate function on a keyboard (121b), close the window including the visual representation of the electronic file on the display (121a) responsive to user input selecting the delete symbol (507) while continuing to provide the user input selecting the alternate function and while the window (501) including the visual representation of the electronic file is open on the display (121a), and delete the electronic file from the location in the memory (103).

9. The electronic system (100) of Claim 8 wherein the user input selecting the alternate function comprises user input holding one or a combination of keys on the keyboard (121b) and wherein the user input selecting the delete symbol comprises user input selecting the delete symbol while holding the one or the combination of keys on the keyboard (121b).

10. The electronic system (100) of Claim 8 wherein the electronic file is a first electronic file, wherein the location is a first location in memory (103), wherein the window (501) is a first window, wherein the user input selecting the delete symbol is a first user input designating deletion, and wherein the processor is configured to delete the first electronic file by deleting the first electronic file from the first location in the memory (103) and saving the first electronic file in a second location in memory (103), render a visual representation of a second electronic file in a second window (501) on the display (121a), close the second window (501) presenting the second electronic file responsive to second user input designating permanent deletion while the second window (501) is open on the display (121a) wherein the second user input (509) is different than the first user input (507), and permanently delete the second electronic file from the memory (103) responsive to the second user input designating permanent deletion while the second window (501) is open on the display (121a).

11. The electronic system (100) of any one of Claims 8-10 wherein the processor (101) is configured to render the visual representation of the electronic file in the window on the display (121a) using a software application (107) and provide a path of the electronic file defining the location of the electronic file in a file directory system of the memory (103), and delete the electronic file from the location in the memory (103) using the path of the electronic file.

12. The electronic system (100) of any one of Claims 8-11 wherein the processor (101) is configured to delete the electronic file from memory (103) responsive to user input selecting the delete symbol while the window is open on the display and responsive to determining that the user is authorized to delete the file.

13. The electronic system (100) of any one of Claims 8, 9, 11, or 12 wherein the location is a first location in the memory (103), and wherein the processor (101) is configured to delete the electronic file by deleting the electronic file from the first location in the memory (103) and saving the electronic file in a second location in the memory (103).

14. The electronic system (100) of any one of Claims 8, 9, 11, or 12 wherein the processor (101) is configured to delete the electronic file by permanently deleting the electronic file from the memory (103).

15. A computer program product comprising:
a computer readable storage medium having computer readable program coded embodied therein, the computer readable program code comprising:
computer readable program code configured to render a visual representation of an electronic file and a close symbol (505) in a window (501) on a display (121a) wherein the electronic file is in a location in memory (103) of an electronic system (100);
computer readable program code configured to substitute a delete symbol (507) for the close symbol (505) in the window responsive to user input selecting an alternate function on a keyboard (121b); and
computer readable program code configured to close the window including the visual representation of the electronic file on the display (121a) responsive to user input selecting the delete symbol (507) while continuing to provide the user input selecting the alternate function and while the window (501) including the visual representation of the electronic file is open on the display (121a), and to delete the electronic file from the location in the memory (103).

## Patentansprüche

1. Verfahren zum Verarbeiten einer elektronischen Datei an einem Ort in einem Speicher (103) eines elektronischen Systems (100), wobei das Verfahren Folgendes umfasst:
Rendern (201) einer visuellen Darstellung der elektronischen Datei und eines Schließen-Symbols (505) in einem Fenster (501) auf einer Anzeige (121a);
Ersetzen (303) eines Löschen-Symbols (507) durch das Schließen-Symbol (505) im Fenster als Reaktion auf eine Benutzereingabe, durch die eine alternative Funktion auf einer Tastatur (121b) ausgewählt (301) wird; und
Schließen (207) des Fensters mit der visuellen Darstellung der elektronischen Datei auf der Anzeige (121a) und Löschen (209) der elektronischen Datei vom Ort im Speicher (103) als Reaktion auf eine Benutzereingabe, durch die das Löschen-Symbol (507) ausgewählt (203') wird, während die Benutzereingabe, durch die die alternative Funktion ausgewählt wird, weiter bereitgestellt wird und während das Fenster (501) mit der visuellen Darstellung der elektronischen Datei auf der Anzeige (121a) offen ist.

2. Verfahren nach Anspruch 1, wobei die Benutzereingabe, durch die die alternative Funktion ausgewählt wird, eine Benutzereingabe umfasst, bei der eine oder eine Kombination von Tasten auf der Tastatur (121b) gehalten wird, und wobei die Benutzereingabe, durch die das Löschen-Symbol ausgewählt wird, eine Benutzereingabe umfasst, durch die das Löschen-Symbol ausgewählt wird, während die eine oder die Kombination von Tasten auf der Tastatur (121b) gehalten wird.

3. Verfahren nach Anspruch 1, wobei die elektronische Datei eine erste elektronische Datei ist, wobei der Ort ein erster Ort im Speicher (103) ist, wobei das Fenster (501) ein erstes Fenster ist, wobei die Benutzereingabe, durch die das Löschen-Symbol (203') ausgewählt wird, eine erste Benutzereingabe ist, durch die eine Löschung gekennzeichnet wird, und wobei das Löschen der ersten elektronischen Datei das Löschen (209a) der ersten elektronischen Datei vom ersten Ort im Speicher (103) und das Speichern (408) der ersten elektronischen Datei an einem zweiten Ort im Speicher (103) umfasst, wobei das Verfahren ferner Folgendes umfasst:
Rendern (201) einer visuellen Darstellung einer zweiten elektronischen Datei in einem zweiten Fenster (501) auf der Anzeige (121a) ;
Schließen (207b) des zweiten Fensters (501), das die zweite elektronische Datei darstellt, als Reaktion auf eine zweite Benutzereingabe, durch die eine permanente Löschung (403) gekennzeichnet wird, während das zweite Fenster (501) auf der Anzeige (121a) offen ist, wobei sich die zweite Benutzereingabe (509) von der ersten Benutzereingabe (507) unterscheidet; und
permanentes Löschen (409) der zweiten elektronischen Datei vom Speicher (103) als Reaktion auf die zweite Benutzereingabe, durch die eine permanente Löschung (403) gekennzeichnet wird, während das zweite Fenster (501) auf der Anzeige (121a) offen ist.

4. Verfahren nach einem der Ansprüche 1 bis 3, wobei das Rendern der visuellen Darstellung der elektronischen Datei das Rendern der visuellen Darstellung der elektronischen Datei im Fenster auf der Anzeige (121a) unter Verwendung einer Software-Anwendung (107) und das Bereitstellen eines Pfades der elektronischen Datei, der den Ort der elektronischen Datei in einem Dateiverzeichnissystem des Speichers (103) definiert, umfasst, und wobei das Löschen der elektronischen Datei das Löschen der elektronischen Datei vom Ort im Speicher (103) unter Verwendung des Pfades der elektronischen Datei umfasst.

5. Verfahren nach einem der Ansprüche 1 bis 4, wobei das Löschen der elektronischen Datei das Löschen (209) der elektronischen Datei aus dem Speicher (103) als Reaktion auf die Benutzereingabe, durch die das Löschen-Symbol ausgewählt (203') wird, während das Fenster auf der Anzeige offen ist, und als Reaktion auf das Bestimmen (205), dass der Benutzer autorisiert ist, die Datei zu löschen, umfasst.

6. Verfahren nach einem der Ansprüche 1, 2, 4 oder 5, wobei der Ort ein erster Ort im Speicher (103) ist, und wobei das Löschen der elektronischen Datei das Löschen (209a) der elektronischen Datei vom ersten Ort im Speicher (103) und das Speichern (408) der elektronischen Datei an einem zweiten Ort im Speicher (103) umfasst.

7. Verfahren nach einem der Ansprüche 1, 2, 4 oder 5, wobei das Löschen der elektronischen Datei das permanente Löschen (409) der elektronischen Datei aus dem Speicher (103) umfasst.

8. Elektronisches System (100), das Folgendes umfasst:
einen elektronischen Speicher (103), einschließlich einer elektronischen Datei an einem Ort im elektronischen Speicher (103); und
einen Prozessor (101), der mit dem Speicher gekoppelt ist, wobei der Prozessor (101) konfiguriert ist, um eine visuelle Darstellung der elektronischen Datei und ein Schließen-Symbol (505) in einem Fenster (501) auf einer Anzeige (121a) zu rendern, ein Löschen-Symbol (507) durch das Schließen-Symbol (505) im Fenster als Reaktion auf eine Benutzereingabe, durch die eine andere Funktion auf einer Tastatur (121b) ausgewählt wird, zu ersetzen, das Fenster mit der visuellen Darstellung der elektronischen Datei auf der Anzeige (121a) als Reaktion auf eine Benutzereingabe, durch die das Löschen-Symbol (507) ausgewählt wird, zu schließen, während die Benutzereingabe, durch die eine alternative Funktion ausgewählt wird, weiter bereitgestellt wird und während das Fenster (501) einschließlich der visuellen Darstellung der elektronischen Datei auf der Anzeige (121a) offen ist, und um die elektronische Datei vom Ort im Speicher (103) zu löschen.

9. Elektronisches System (100) nach Anspruch 8, wobei die Benutzereingabe, durch die die alternative Funktion ausgewählt wird, eine Benutzereingabe umfasst, durch die eine oder eine Kombination von Tasten auf der Tastatur (121b) gehalten wird, und wobei die Benutzereingabe, durch die das Löschen-Symbol ausgewählt wird, eine Benutzereingabe umfasst, durch die das Löschen-Symbol ausgewählt wird, während die eine oder die Kombination von Tasten auf der Tastatur (121b) gehalten wird.

10. Elektronisches System (100) nach Anspruch 8, wobei die elektronische Datei eine erste elektronische Datei ist, wobei der Ort ein erster Ort in einem Speicher (103) ist, wobei das Fenster (501) ein erstes Fenster ist, wobei die Benutzereingabe, durch die das Löschen-Symbol ausgewählt wird, eine erste Benutzereingabe ist, durch die eine Löschung gekennzeichnet wird, und wobei der Prozessor konfiguriert ist, um die erste elektronische Datei durch Löschen der ersten elektronischen Datei vom ersten Ort im Speicher (103) und durch Speichern der ersten elektronischen Datei an einem zweiten Ort im Speicher (103) zu löschen, eine visuelle Darstellung von einer zweiten elektronischen Datei in einem zweiten Fenster (501) auf der Anzeige (121a) zu rendern, das zweite Fenster (501) zu schließen, das die zweite elektronische Datei darstellt, als Reaktion auf eine zweite Benutzereingabe, durch die eine permanente Löschung gekennzeichnet wird, während das zweite Fenster (501) auf der Anzeige (121a) offen ist, wobei sich die zweite Benutzereingabe (509) von der ersten Benutzereingabe (507) unterscheidet, und die zweite elektronische Datei aus dem Speicher (103) als Reaktion auf eine Benutzereingabe, durch die eine permanente Löschung gekennzeichnet wird, permanent zu löschen, während das zweite Fenster (501) auf der Anzeige (121a) offen ist.

11. Elektronisches System (100) nach einem der Ansprüche 8 bis 10, wobei der Prozessor (101) konfiguriert ist, um die visuelle Darstellung der elektronischen Datei im Fenster auf der Anzeige (121a) unter Verwendung einer Software-Anwendung (107) zu rendern und einen Pfad der elektronischen Datei bereitzustellen, der den Ort der elektronischen Datei in einem Dateiverzeichnissystem des Speichers (103) definiert, und die elektronische Datei vom Ort im Speicher (103) unter Verwendung des Pfades der elektronischen Datei zu löschen.

12. Elektronisches System (100) nach einem der Ansprüche 8 bis 11, wobei der Prozessor (101) konfiguriert ist, um die elektronische Datei aus dem Speicher (103) als Reaktion auf eine Benutzereingabe, die das Löschen-Symbol auswählt, während das Fenster auf der Anzeige offen ist, und als Reaktion auf das Bestimmen, dass der Benutzer autorisiert ist, die Datei zu löschen, zu löschen.

13. Elektronisches System (100) nach einem der Ansprüche 8, 9, 11 oder 12, wobei der Ort ein erster Ort im Speicher (103) ist, und wobei der Prozessor (101) konfiguriert ist, um die elektronische Datei durch Löschen der elektronischen Datei vom ersten Ort im Speicher (103) und Speichern der elektronischen Datei an einem zweiten Ort im Speicher (103) zu löschen.

14. Elektronisches System (100) nach einem der Ansprüche 8, 9, 11 oder 12, wobei der Prozessor (101) konfiguriert ist, um die elektronische Datei durch das permanente Löschen der elektronischen Datei aus dem Speicher (103) zu löschen.

15. Computerprogrammprodukt, umfassend:
ein computerlesbares Speichermedium mit einem darin integrierten, codierten computerlesbaren Programm, wobei der computerlesbare Programmcode Folgendes umfasst:
computerlesbaren Programmcode, der konfiguriert ist, um eine visuelle Darstellung einer elektronischen Datei und eines Schließen-Symbols (505) in einem Fenster (501) auf einer Anzeige (121a) zu rendern, wobei sich die elektronische Datei an einem Ort im Speicher (103) eines elektronischen Systems (100) befindet;
computerlesbaren Programmcode, der konfiguriert ist, um ein Löschen-Symbol (507) durch das Schließen-Symbol (505) im Fenster als Reaktion auf eine Benutzereingabe, durch die eine alternative Funktion auf einer Tastatur (121b) ausgewählt wird, zu ersetzen; und
computerlesbaren Programmcode, der konfiguriert ist, um ein Fenster einschließlich der visuellen Darstellung der elektronischen Datei auf der Anzeige (121a) als Reaktion auf eine Benutzereingabe, durch die das Löschen-Symbol (507) ausgewählt wird, zu schließen, während die Benutzereingabe, durch die die alternative Funktion ausgewählt wird, weiter bereitgestellt wird und während das Fenster (501) mit der visuellen Darstellung der elektronischen Datei auf der Anzeige (121a) offen ist, und um die elektronische Datei vom Ort im Speicher (103) zu löschen.

## Revendications

1. Procédé de traitement d'un fichier électronique dans un emplacement en mémoire (103) d'un système électronique (100), le procédé comprenant :
la restitution (201) d'une représentation visuelle du fichier électronique et d'un symbole de fermeture (505) dans une fenêtre (501) sur un affichage (121a) ;
en réponse à une saisie utilisateur sélectionnant (301) une autre fonction sur un clavier (121b), le remplacement (303) du symbole de fermeture (505) par un symbole de suppression (507) dans la fenêtre ; et
en réponse à une saisie utilisateur sélectionnant (203') le symbole de suppression (507) tout en continuant de fournir la saisie utilisateur sélectionnant l'autre fonction et alors que la fenêtre (501) incluant la représentation visuelle du fichier électronique est ouverte sur l'affichage (121a), la fermeture (207) de la fenêtre incluant la représentation visuelle du fichier électronique sur l'affichage (121a) et la suppression (209) du fichier électronique de l'emplacement dans la mémoire (103).

2. Procédé selon la revendication 1, dans lequel la saisie utilisateur sélectionnant l'autre fonction comprend une saisie utilisateur maintenant une touche ou une combinaison de touches sur le clavier (121b) et dans lequel la saisie utilisateur sélectionnant le symbole de suppression comprend une saisie utilisateur sélectionnant le symbole de suppression tout en maintenant la touche ou la combinaison de touches sur le clavier (121b).

3. Procédé selon la revendication 1, dans lequel le fichier électronique est un premier fichier électronique, dans lequel l'emplacement est un premier emplacement en mémoire (103), dans lequel la fenêtre (501) est une première fenêtre, dans lequel la saisie utilisateur sélectionnant (203') le symbole de suppression est une première saisie utilisateur désignant une suppression, et dans lequel la suppression du premier fichier électronique comprend la suppression (209a) du premier fichier électronique du premier emplacement dans la mémoire (103) et l'enregistrement (408) du premier fichier électronique dans un deuxième emplacement en mémoire (103), le procédé comprenant en outre :
la restitution (201) d'une représentation visuelle d'un deuxième fichier électronique dans une deuxième fenêtre (501) sur l'affichage (121a) ;
en réponse à une deuxième saisie utilisateur désignant une suppression permanente (403) alors que la deuxième fenêtre (501) est ouverte sur l'affichage (121a) dans lequel la deuxième saisie utilisateur (509) est différente de la première saisie utilisateur (507), la fermeture (207b) de la deuxième fenêtre (501) présentant le deuxième fichier électronique ; et
en réponse à la deuxième saisie utilisateur désignant une suppression permanente (403) alors que la deuxième fenêtre (501) est ouverte sur l'affichage (121a), la suppression permanente (409) du deuxième fichier électronique de la mémoire (103).

4. Procédé selon l'une quelconque des revendications 1 à 3, dans lequel la restitution de la représentation visuelle du fichier électronique comprend la restitution de la représentation visuelle du fichier électronique dans la fenêtre sur l'affichage (121a) en utilisant une application logicielle (107) et la fourniture d'un chemin d'accès du fichier électronique définissant l'emplacement du fichier électronique dans un système de répertoire de fichiers de la mémoire (103), et dans lequel la suppression du fichier électronique comprend la suppression du fichier électronique de l'emplacement dans la mémoire (103) en utilisant le chemin d'accès du fichier électronique.

5. Procédé selon l'une quelconque des revendications 1 à 4, dans lequel la suppression du fichier électronique comprend la suppression (209) du fichier électronique de la mémoire (103) en réponse à la saisie utilisateur sélectionnant (203') le symbole de suppression alors que la fenêtre est ouverte sur l'affichage et en réponse à la détermination (205) que l'utilisateur est autorisé à supprimer le fichier.

6. Procédé selon l'une quelconque des revendications 1, 2, 4 ou 5, dans lequel l'emplacement est un premier emplacement dans la mémoire (103), et dans lequel la suppression du fichier électronique comprend la suppression (209a) du fichier électronique du premier emplacement dans la mémoire (103) et l'enregistrement (408) du fichier électronique dans un deuxième emplacement dans la mémoire (103).

7. Procédé selon l'une quelconque des revendications 1, 2, 4 ou 5, dans lequel la suppression du fichier électronique comprend la suppression permanente (409) du fichier électronique de la mémoire (103).

8. Système électronique (100) comprenant :
une mémoire électronique (103) incluant un fichier électronique dans un emplacement dans la mémoire électronique (103) ; et
un processeur (101) couplé à la mémoire, dans lequel le processeur (101) est configuré pour restituer une représentation visuelle du fichier électronique et un symbole de fermeture (505) dans une fenêtre (501) sur un affichage (121a), remplacer le symbole de fermeture (505) par un symbole de suppression (507) dans la fenêtre en réponse à une saisie utilisateur sélectionnant une autre fonction sur un clavier (121b), fermer la fenêtre incluant la représentation visuelle du fichier électronique sur l'affichage (121a) en réponse à une saisie utilisateur sélectionnant le symbole de suppression (507) tout en continuant de fournir la saisie utilisateur sélectionnant l'autre fonction et alors que la fenêtre (501) incluant la représentation visuelle du fichier électronique est ouverte sur l'affichage (121a), et supprimer le fichier électronique de l'emplacement dans la mémoire (103).

9. Système électronique (100) selon la revendication 8, dans lequel la saisie utilisateur sélectionnant l'autre fonction comprend une saisie utilisateur maintenant une touche ou une combinaison de touches sur le clavier (121b) et dans lequel la saisie utilisateur sélectionnant le symbole de suppression comprend une saisie utilisateur sélectionnant le symbole de suppression tout en maintenant la touche ou la combinaison de touches sur le clavier (121b).

10. Système électronique (100) selon la revendication 8, dans lequel le fichier électronique est un premier fichier électronique, dans lequel l'emplacement est un premier emplacement en mémoire (103), dans lequel la fenêtre (501) est une première fenêtre, dans lequel la saisie utilisateur sélectionnant le symbole de suppression est une première saisie utilisateur désignant une suppression, et dans lequel le processeur est configuré pour supprimer le premier fichier électronique en supprimant le premier fichier électronique du premier emplacement dans la mémoire (103) et en enregistrant le premier fichier électronique dans un deuxième emplacement en mémoire (103), pour restituer une représentation visuelle d'un deuxième fichier électronique dans une deuxième fenêtre (501) sur l'affichage (121a), pour fermer la deuxième fenêtre (501) présentant le deuxième fichier électronique en réponse à une deuxième saisie utilisateur désignant une suppression permanente alors que la deuxième fenêtre (501) est ouverte sur l'affichage (121a) dans lequel la deuxième saisie utilisateur (509) est différente de la première saisie utilisateur (507), et pour supprimer de façon permanente le deuxième fichier électronique de la mémoire (103) en réponse à la deuxième saisie utilisateur désignant une suppression permanente alors que la deuxième fenêtre (501) est ouverte sur l'affichage (121a).

11. Système électronique (100) selon l'une quelconque des revendications 8 à 10, dans lequel le processeur (101) est configuré pour restituer la représentation visuelle du fichier électronique dans la fenêtre sur l'affichage (121a) en utilisant une application logicielle (107) et pour fournir un chemin d'accès du fichier électronique définissant l'emplacement du fichier électronique dans un système de répertoire de fichiers de la mémoire (103), et pour supprimer le fichier électronique de l'emplacement dans la mémoire (103) en utilisant le chemin d'accès du fichier électronique.

12. Système électronique (100) selon l'une quelconque des revendications 8 à 11, dans lequel le processeur (101) est configuré pour supprimer le fichier électronique de la mémoire (103) en réponse à une saisie utilisateur sélectionnant le symbole de suppression alors que la fenêtre est ouverte sur l'affichage et en réponse à la détermination que l'utilisateur est autorisé à supprimer le fichier.

13. Système électronique (100) selon l'une quelconque des revendications 8, 9, 11 ou 12, dans lequel l'emplacement est un premier emplacement dans la mémoire (103), et dans lequel le processeur (101) est configuré pour supprimer le fichier électronique en supprimant le fichier électronique du premier emplacement dans la mémoire (103) et en enregistrant le fichier électronique dans un deuxième emplacement dans la mémoire (103).

14. Système électronique (100) selon l'une quelconque des revendications 8, 9, 11 ou 12, dans lequel le processeur (101) est configuré pour supprimer le fichier électronique par suppression permanente du fichier électronique de la mémoire (103).

15. Produit programme informatique comprenant :
un support de stockage lisible par ordinateur ayant un code de programme lisible par ordinateur mis en pratique en son sein, le code de programme lisible par ordinateur comprenant :
un code de programme lisible par ordinateur configuré pour restituer une représentation visuelle d'un fichier électronique et un symbole de fermeture (505) dans une fenêtre (501) sur un affichage (121a) dans lequel le fichier électronique est dans un emplacement en mémoire (103) d'un système électronique (100) ;
un code de programme lisible par ordinateur configuré pour remplacer le symbole de fermeture (505) par un symbole de suppression (507) dans la fenêtre en réponse à une saisie utilisateur sélectionnant une autre fonction sur un clavier (121b) ; et
un code de programme lisible par ordinateur configuré pour fermer la fenêtre incluant la représentation visuelle du fichier électronique sur l'affichage (121a) en réponse à une saisie utilisateur sélectionnant le symbole de suppression (507) tout en continuant de fournir la saisie utilisateur sélectionnant l'autre fonction et alors que la fenêtre (501) incluant la représentation visuelle du fichier électronique est ouverte sur l'affichage (121a), et pour supprimer le fichier électronique de l'emplacement dans la mémoire (103).
